# EUROPÄISCHE PATENTANMELDUNG

(11) **EP 2 448 040 A2**
(43) Veröffentlichungstag der Anmeldung: **02.05.2012**
(21) Anmeldenummer: 11000977.6
(22) Anmeldetag: 07.02.2011
(51) Int. Cl.: H01M 2/12, B65D 51/16, B65D 81/26, F16K 17/164, F16K 31/08, H01M 2/10, H01M 8/24, H01G 2/10

(54) **Magnetisch dichtende Ventilvorrichtung für ein Batteriegehäuse**

(30) Priorität: 28.10.2010 DE 102010049649
(71) Anmelder: Firma Carl Freudenberg, 69469 Weinheim (DE)
(72) Erfinder: Kritzer, Peter, Dr., 67147 Forst (DE); Nahrwold, Olaf, 67071 Ludwigshafen (DE); Clemens, Markus, 64385 Reichelsheim (DE); Unger, Hans, 69518 Abtsteinach (DE); Kramer, Thomas, 64668 Rimbach (DE)

(57) **Zusammenfassung**

Die vorliegende Erfindung betrifft eine Ventilvorrichtung (4) für ein Gehäuse (2) einer elektrochemischen Stromquelle (1), sowie ein Gehäuse (2) mit einer magnetischen Ventilvorrichtung (4) und eine elektrochemische Stromquelle (1) mit einem eine magnetische Ventilvorrichtung (4) aufweisenden Gehäuse (2). Des Weiteren betrifft die Erfindung die Verwendung einer magnetischen Ventileinrichtung (4) für unter anderem Batteriegehäuse, Brennstoffzellengehäuse, sowie chemische oder biologische Reaktoren. Durch Verwendung einer magnetischen Ventilvorrichtung (4) als Überdruckventil kann das Gehäuse (2) auch nach Jahren im Einsatz noch betriebssicher ausgebildet werden und zudem kann die Ventileinrichtung (4) nach einem Öffnen und Druckabbau automatisch wieder in die Verschlussposition wechseln und so ohne Fremdeinwirkung einen Schutz gegen Eindringen von Fluiden in den Gehäuseinnenraum (5) wiederaufbauen.

## Beschreibung

### Technisches Gebiet

Die vorliegende Erfindung betrifft eine Ventilvorrichtung für ein Gehäuse einer elektrochemischen Stromquelle, sowie ein Gehäuse mit einer magnetischen Ventilvorrichtung und eine elektrochemische Stromquelle mit einem eine magnetische Ventilvorrichtung aufweisenden Gehäuse. Desweiteren betrifft die Erfindung die Verwendung einer magnetischen Ventileinrichtung für unter anderem Batteriegehäuse, Brennstoffzellengehäuse, sowie chemische oder biologische Reaktoren.

### Stand der Technik

Großformatige Batterie-Systeme bzw. andere elektrochemische Speicher wie beispielsweise Superkondensatoren finden in immer mehr Applikationen Verwendung. Sie finden insbesondere in Back-Up-Applikationen, nämlich Notstromversorgungen, Verwendung. Sie finden beispielsweise in Elektrofahrzeugen oder Hybrid-Fahrzeugen, in industriellen Traktionssystemen, wie Gabelstaplern oder Robotern, in Flurförderfahrzeugen sowie in Sport- und Freizeit-Fahrzeugen Verwendung. Weitere Anwendungen finden sich in Bahnen und Flugzeugen.

Bei all diesen Anwendungen bestehen die Batterien in der Regel aus einer Vielzahl von einzelnen Zellen, welche in einem Batteriegehäuse untergebracht sind. Typische Spannungen der so verwendeten Energiespeicher betragen bis zu 1000 V. Stromstärken von mehr als 100 A sind möglich.

Typische Längen und Breiten der Batteriegehäuse sind 500 mm x 800 mm. Die Wandstärken der Batteriegehäuse betragen typischerweise 1 bis 5 mm. Die Batteriegehäuse werden aus Metallen, insbesondere Stahl oder Aluminium, oder aus Kunststoffen, insbesondere Polyamid, gefertigt.

Bei einem internen Kurzschluss kann innerhalb einer einzelnen Zelle eine Gasentwicklung stattfinden. Typische freiwerdende Volumina bei einer 40 Ah - Lithium - Zelle liegen im Bereich von 100 l. Das freigesetzte Gas, welches aus Elektrolyt bzw. Elektrolyt-Abbauprodukten besteht, ist hierbei brennbar und toxisch.

Typischerweise öffnen Zellen im flexiblen Coffee-Bag-Design bei Innendrücken, die unter 1 bar liegen, und öffnen Zellen mit fester, metallischer Hülle im zylindrischen bzw. prismatischen Design bei Drücken von mehr als 10 bar.

Das freigesetzte Gas gelangt dann in das Batteriegehäuse und führt dort zu einem Druckanstieg. Dieser hängt von dem Totvolumen im Batteriegehäuse ab. Des Weiteren hängt der Druckanstieg von einer eventuellen Möglichkeit des Druckabbaus durch Undichtigkeiten, beispielsweise in der Gehäusedichtung, von einem Transfer des Gases durch Druckausgleichsöffnungen, welche zu einer Regulierung des Innendrucks der Batterie im Normalzustand angebracht sind, sowie von der Art der Zellen bzw. der Schnelligkeit einer Zellöffnung ab.

Bei der plötzlichen Freisetzung von Gasen kann das Batteriegehäuse platzen. Bei einem Totvolumen von 20 l und einem Freisetzen von 100 l Gas würde das Batteriegehäuse unter einem Überdruck von 5 bar stehen. Das brennbare und toxische Gas kann mit Personen in Kontakt kommen, wenn es beispielsweise in den Innenraum eines Fahrzeuges gelangen kann. Das brennbare und toxische Gas kann in Kontakt mit stromführenden Teilen kommen, was zu einer Entzündung oder Explosion führen kann.

In der Regel sind die freigesetzten Gase nicht besonders heiß, so dass Werkstoffe aus NBR oder EPDM den Gasen Stand halten können. Hinzu kommt, dass bei einer Freisetzung der Gase die Dichtung keine Rolle mehr spielt, da ein Ventil öffnen muss. Oftmals existieren für Ventile und deren Komponenten Forderungen nach einer Temperaturbeständigkeit von mehr als 500 °C und nach einer Resistenz gegenüber Flusssäure.

Diese Temperaturbedingungen können bei brennenden Batterien auftreten. Die normalerweise freigesetzten relativ geringen Flusssäurekonzentrationen können bei Verwendung von polyolefinischen Elastomeren wie EPDM toleriert werden. Um äußerst kritische Zustände des Gesamtsystems bei der genannten Öffnung einer Zelle zu vermeiden, muss daher jede großformatige Batterie, insbesondere eine Lithium-Batterie, eine Vorrichtung zum sicheren Abbau von Überdrücken besitzen.

Ein Ventil zum Abbau von Überdrücken darf bei normalen Betriebszuständen nicht öffnen. Beispielsweise dürfen Druckunterschiede durch Temperaturkompensation oder Druckunterschiede bei Berg- und Talfahrten nicht zu einer Öffnung des Ventils führen. Diese typischen Druckschwankungen liegen im Bereich von max. +/- 0,2 bar. Ein Ventil muss überdies auf jeden Fall verhindern, dass Wasser von außen eindringen kann.

Vor allem bei automobilen Anwendungen werden daher an das Ventil erhöhte Anforderungen gestellt. Es muss in der Regel eine Watfähigkeit gegeben sein. In Waschanlagen oder bei auftretendem Spritzwasser unter hohem Druck muss eine Dichtheit gegeben sein. Hier wird in der Regel die Schutzart IP 67 ("Wasserschutz" nach DIN EN 60529 bzw. DIN 40050 Teil 9) gefordert. Hierbei muss das Ventil von außen anstehende Überdrücke von typischerweise 1 bis 2 bar tolerieren können.

Des Weiteren muss verhindert werden, dass bei Öffnung des Ventils Teile herumfliegen. Im Falle eines Öffnens sollte daher ein gemäßigter Abbau des Überdrucks stattfinden. Das heißt, dass eine Öffnung eines Ventils nicht schlagartig erfolgen soll, der Überdruck aber dennoch zügig abgebaut wird. Das Gesamtsystem soll robust sein. Es soll garantiert auch nach 10 Jahren unter "Auto-Bedingungen" noch funktionieren.

Das Ventil sollte daher keine Alterung zeigen sowie bei Verschmutzung und Korrosion nicht festbacken. Typische freie Querschnittsflächen des Ventils hängen von der Kapazität der Zellen und der Größe der Batterie ab. Typische Querschnittsflächen sind 5 cm² bis 30 cm².

Um die genannten Probleme zu lösen, enthalten die Batteriegehäuse von großformatigen Lithium-Batterien in der Regel eine Einheit zum Abbauen von Überdruck. Hierzu gibt es mehrere Ausführungen.

Denkbar ist ein Ventil, welches in Verbindung mit einem innenliegenden Drucksensor gesteuert wird. Hierbei ist nachteilig, dass diese Ausführung technisch aufwendig und teuer ist, Strom verbraucht, anfällig gegen Korrosion und technisch zu komplex ist. Es kann auch das Prinzip einer Berstscheibe eingesetzt werden. Hierzu werden beispielsweise thermoplastische Folien auf Öffnungen des Batteriegehäuses aufgebracht. Hierbei ist nachteilig, dass es zu einer Materialversprödung kommen kann, die in einem Versagen resultiert. Es ist kein gemäßigter Druckabbau möglich, da eine Berstscheibe platzt. Eine Folie ist anfällig gegenüber äußerer Durchstoßung und/ oder Verletzung. Des Weiteren kann ein Federventil eingesetzt werden. Hierbei ist nachteilig, dass herumfliegende Teile nicht ausgeschlossen werden können, dass eine Anfälligkeit der Feder gegen Korrosion besteht und dass die Öffnungsquerschnittsfläche beschränkt ist.

### Darstellung der Erfindung

Der vorliegenden Erfindung liegt die Aufgabe zugrunde, für eine Ventileinrichtung eine verbesserte Ausführungsform anzugeben, die sich insbesondere durch eine zuverlässige Dichtheit im Normalbetrieb und durch ein kontrolliertes Abführen von entstehenden Fluiden im Störbetrieb sowie durch eine Funktionstüchtigkeit im Normalbetrieb, sowie im Störbetrieb auch nach Jahren im Einsatz auszeichnet.

Erfindungsgemäß wird diese Aufgabe durch die Gegenstände der unabhängigen Ansprüche gelöst. Vorteilhafte Ausführungsformen sind Gegenstand der abhängigen Ansprüche.

Als ein Aspekt der Erfindung wird eine Ventilvorrichtung für ein Gehäuse einer elektrochemischen Stromquelle mit einer magnetischen Ventileinrichtung vorgeschlagen. Dabei umfasst die magnetische Ventileinrichtung ein Verschlusselement, das eine Gehäuseöffnung in einer Verschlussposition druckdicht verschließt und in einer Öffnungsposition öffnet, damit Fluide aus einem Gehäuseinnenraum entweichen können. Des Weiteren umfasst die magnetische Ventileinrichtung zumindest einen Magnetfelderzeuger, der bis zu einem vorbestimmten Überdruck in dem Gehäuseinnenraum das Verschlusselement in der Verschlussposition druckdichtend fixiert und bei Erreichen oder Überschreiten des vorbestimmten Überdrucks einen Wechsel des Verschlusselementes in zumindest eine Öffnungsposition zulässt. Vorteilhaft wird dadurch im Normalbetrieb der druckdichte Verschluss der Gehäuseöffnung durch eine magnetische Kraftwirkung sichergestellt. Dies hat den wesentlichen Vorteil, dass die Kraft mit der das Verschlusselement in der Verschlussposition druckdichtend fixiert ist über den Funktionszeitraum hinweg weitestgehend konstant bleibt. Dadurch kann ein Nachlassen der Kraft bei längerer Einsatzdauer weitestgehend vermieden werden, so dass eine ordnungsgemäße Funktion der Ventileinrichtung auch über lange Jahre sichergestellt werden kann. Da der Temperaturbereich, in dem der zumindest eine Magnetfelderzeugar eingesetzt wird, üblicherweise circa 100 °C oder zumindest 150°C nicht oder nur für kurze Zeit überschreitet, ist mit einem Nachlassen der Magnetkraft des zumindest einen Magnetfelderzeugers nicht zu rechnen, zumal dieser Temperaturbereich unterhalb der Curie-Temperatur von üblicherweise einsetzbaren Permanent-Magneten liegt

Ein weiterer wesentlicher Vorteil der magnetischen Ausführung der Ventileinrichtung ist die Möglichkeit eines automatischen Wiederverschließens der Gehäuseöffnung durch das Verschlusselement mittels des zumindest einen Magnetfelderzeugers, wenn das Verschlusselement wieder in die Nähe der Gehäuseöffnung, durch zum Beispiel die Schwerkraft oder eine rücktreibende Spannung, rückbewegt wird. Bei dementsprechender Ausbildung der Ventileinrichtung ist somit ein gänzlich automatisches, druckdichtes Wiederverschließen der Ventileinrichtung ohne äußere Einwirkung und im Wesentlichen aufgrund der Magnetkraft des zumindest einen Magnetfelderzeugers möglich.

Unter einer elektrochemischen Stromquelle ist eine Stromquelle zu verstehen, die zumindest einen elektrochemischen Energiespeicher und/oder zumindest einen elektrochemischen Energieerzeuger aufweist. Somit wird der Strom, der von der elektrochemischen Stromquelle abgegeben werden kann, entweder unmittelbar vor der Abgabe elektrochemisch erzeugt oder er ist zuvor in einem Energiespeicher elektrochemisch gespeichert worden. Als elektrochemische Energieerzeuger kommen sämtliche derzeit bekannten Brennstoffzellenvarianten in Betracht, wie beispielsweise alkalische Brennstoffzellen (AFC), Polymerelektrolyt-Brennstoffzellen (PEMFC), Direktmethanol-Brennstoffzellen (DMFC), Ameisensäure-Brennstoffzellen, Phosphorsäure-Brennstoffzellen (PAFC), Schmelzkarbonat-Brennstoffzellen (MCFC) oder Festoxid-Brennstoffzellen (SOFC). Als elektrochemische Energiespeicher können Batterien beziehungsweise Akkumulatoren, wie beispielsweise Blei-Akkumulatoren, Nickel-Cadmium- Akkumulatoren, Nickel-Wasserstoff- Akkumulatoren, Nickel-Metallhydrid- Akkumulatoren, Nickel-Eisen- Akkumulatoren, Lithium-lonen- Akkumulatoren, Lithium-Polymer Akkumulatoren, Lithium-Metall- Akkumulatoren, Lithium-Metall-Polymer-Akkumulatoren, Lithium-Mangan- Akkumulatoren, Lithium-Eisen-Phosphat-Akkumulatoren, Lithium-Titanat- Akkumulatoren, Lithium-Schwefel-Akkumulatoren, Zink-Schwefel-Lithium- Akkumulatoren, Natrium-Nickeichlorid-Hochtemperatur- Akkumulatoren, Zink-Schwefel-Lithium- Akkumulatoren, Silber-Zink- Akkumulatoren, Vanadium-Redox- Akkumulatoren oder Zink-Brom-Akkumulatoren eingesetzt werden oder sogenannte Doppelschichtkondensatoren mit einer Energiedichte von beispielsweise über 4 kWh/kg. Als elektrochemische Stromquelle können auch mehrere unterschiedliche elektrochemische Stromerzeuger und/oder Stromspeicher in beliebiger Kombination eingesetzt werden. So ist es beispielsweise denkbar eine Brennstoffzelle in Kombination mit einem SuperCap oder GoldCap als Doppelschichtkondensator einzusetzen, um Lastspitzen gegebenenfalls mittels des Doppelschichtkondensators abzufangen, wenn die Brennstoffzelle die anfallende Last nicht mehr allein bewältigen kann.

Ein Druckanstieg kann bei wässrigen Elektrolyten beispielsweise durch eine Elektrolyse bei einer Überladung auftreten. Hierbei kann Wasserstoff freigesetzt werden. Ein Druckanstieg kann bei Systemen mit organischen Elektrolyten durch Elektrolyse und chemischen Abbau auftreten.

Unter einer Ventilvorrichtung sei dabei eine Vorrichtung zu verstehen, die es ermöglicht, ein in dem Gehäuse auftretenden Überdruck kontrolliert abzuführen, ohne dass das Gehäuse beschädigt oder gar zerstört wird. Unter einer magnetischen Ventilvorrichtung ist eine Ventilvorrichtung zu verstehen, die das Verschlusselement vor der Gehäuseöffnung mittels Magnetkraft positioniert. Dabei weist die magnetischen Ventilvorrichtung ein Verschlusselement auf und zumindest einen Magnetfelderzeuger mit dem das Verschlusselement in der Verschlussposition druckdichtend gehalten wird. Dabei ist unter der Verschlussposition diejenige Position des Verschlusselementes zu verstehen, bei der das Verschlusselement so vor der Gehäuseöffnung positioniert ist, dass diese durch das Verschlusselement druckdichtend verschlossen wird. Erreicht oder übersteigt nun der Innendruck im Gehäuseinnenraum einen vorbestimmten Überdruck, so wird durch den Innendruck das Verschlusselement von der Gehäuseöffnung weggedrückt, dadurch die Gehäuseöffnung geöffnet und das Verschlusselement wechselt in eine Öffnungsposition. In der Öffnungsposition steht die Gehäuseöffnung derart offen, dass in dem Gehäuseinnenraum entstandene Fluide entweichen können. Dabei kann das Verschlusselement eine vorbestimmte Öffnungsposition einnehmen oder in mehrere mögliche Öffnungspositionen wechseln.

Unter Fluide sind Gase, Dämpfe, Aerosole, feinstverteilte Stäube oder eine Mischung derselben zu verstehen.

Zudem kann das Verschlusselement als Klappe, Deckel, Pfropfen, Hohlpfropfen oder dergleichen ausgebildet sein. Seine Formgebung kann rund, mehreckig, insbesondere dreieckig, viereckig, fünfeckig oder sechseckig oder oval ausgebildet sein und es kann im Falle eines Hohlpfropfens oder Pfropfens eine konisch zulaufende Form aufweisen. Das Verschlusselement ist vorzugsweise formstabil und kann demzufolge eine Materialstärke von 0,01 bis10 mm aufweisen. Beispielsweise ist auch eine Materialstärke von 0,1 bis10 mm, insbesondere von 0,1 bis 5 mm und gegebenenfalls von 0,5 bis 5 mm möglich. Bevorzugt ist eine Materialstärke von 1 bis 5 mm.

Des Weiteren kann es leicht, steif und/oder hart ausgebildet seien. Dabei kann das Verschlusselement eine Dichte von maximal 8 kg/l aufweisen. Beispielsweise ist auch eine Dichte von maximal 5 kg/l, insbesondere von maximal 3 kg/l und gegebenenfalls von maximal 2 kg/l möglich. Bevorzugt ist eine Dichte von maximal 3 kg/l.

Auch kann das Verschlusselement aus Materialien wie Metallen, insbesondere Aluminium und Aluminiumlegierungen, rostfreien Stählen oder Leichtmetalllegierungen hergestellt sein. Des Weiteren kann es alternativ oder zusätzlich Polymere, insbesondere als Beschichtung, aufweisen oder aus Polymeren hergestellt sein. Auch kann es als Polymerschaum oder geschlossenporiger Metallschaum ausgebildet sein oder derartige Schäume aufweisen. Weiterhin kann das Verschlusselement Hilfsstoffe zur Steigerung der elektromagnetischen Verträglichkeit (EMV) aufweisen oder mit denselben beschichtet sein. Als solche Hilfsstoffe können elektrisch leitfähige Materialien wie Metalle oder elektrisch leitfähige Kunststoffe oder leitfähige Kunststoffmodifikationen zum Einsatz kommen.

Des Weiteren kann das Verschlusselement mit einer Aufkantung versehen sein, die eine aus einer Gehäusewandung herausragende Gehäuseöffnung derart umgreift, dass die Gehäuseöffnung vorteilhaft gegen beispielsweise Spritzwasser abgeschirmt ist. Das Verschlusselement kann am Gehäuse oder an einem Rahmenelement, wie nachfolgend beschriebenen, befestigt sein, gegebenenfalls mittels eines Scharnierelementes, ebenfalls wie nachfolgend beschrieben. Dabei kann die Befestigung des Verschlusselementes am Gehäuse oder am Rahmenelement mittels einer Steckverbindung, durch Verklebung, Verschraubung, Verspannung, Anspritzen oder mittels eines angespritzten Elementes vorgenommen werden.

Unter einem Überdruck ist eine Druckdifferenz zwischen dem außerhalb des Gehäuses auftretenden Druckes und einem in dem Gehäuseinnenraum herrschenden Druck zu verstehen. Unter druckdicht ist eine Druckdichtheit der Ventileinrichtung bis zu dem vorbestimmten Überdruck im Gehäuseinnenraum zu verstehen. Des Weiteren ist unter druckdicht ebenfalls eine Dichtigkeit gegenüber dem Eindringen und/oder Austreten von Fluiden in den Gehäuseinnenraum oder aus dem Gehäuseinnenraum zu verstehen. Somit wird ihm Normalbetrieb ein Eindringen von Wasser, Öl oder Gasen von außen in den Gehäuseinnenraum, sowie ein Austreten von Fluiden aus dem Gehäuseinnenraum verhindert. Damit kann vorteilhaft ein Kurzschluss der elektrochemischen Stromquelle und eine Fehlfunktion durch beispielsweise eindringendes Wasser verhindert werden.

Zumindest ein Magnetfelderzeuger kann als Permanent-Magnet oder SuperMagnet ausgebildet sein oder auf elektromagnetischer Induktion basieren. Als Materialien für die Permanent- beziehungsweise Super-Magnete können beispielsweise Kobalt-Samarium-, Neodym-Eisen-Bor-, Aluminium-Nickel Cobalt-Legierungen und/oder Hartferrite auf Basis von Barium oder Strontium eingesetzt werden. Des Weiteren können die Werkstoffe, die zur Herstellung der Permanent- beziehungsweise Supermagneten eingesetzt werden eine Curie-Temperatur aufweisen, die die über 100 °C liegt. Beispielsweise ist auch eine Curie-Temperatur von mehr als 110 °C, insbesondere von mehr als 120 °C und gegebenenfalls von mehr als 130°C möglich. Bevorzugt ist eine Curie-Temperatur von mehr als 140 °C oder 150°C.

Dadurch kann sichergestellt werden, dass die Funktionstüchtigkeit des Magnetfelderzeugers auch im langjährigen Einsatz nicht verloren geht.

Der Magnetfelderzeuger kann als magnetisches Polymer ausgebildet sein. Dabei kann zum Beispiel ein Permanentmagnet in Pulverform oder anderweitig mehr oder minder feinstverteilt in dem Polymer vorliegen. Dabei kann in diesem Falle das magnetische Polymer als offen- und/oder geschlossen-poriger Schaum vorliegen. Des Weiteren ist die Ausbildung des Magnetfelderzeugers auch als Permanentmagnet beziehungsweise Supermagnet aus einem Vollmaterial denkbar. Ebenfalls zum Einsatz kommen können als Magnetfelderzeuger Magnetbänder und/oder Magnetpapiere. Des Weiteren kann der Magnetfelderzeuger gleichzeitig auch als Anschlags-Stopper ausgebildet sein. Der Magnetfelderzeuger kann flächig ausgebildet sein oder auch nur punktförmig eingesetzt werden.

Dasjenige Gegenbauteil, das zusammen mit dem zumindest einen Magnetfelderzeuger eine magnetische Kraftwirkung erfährt, kann ebenfalls als Magnetfelderzeuger ausgebildet sein, einen solchen aufweisen oder aus einem magnetischen oder magnetisierbaren Material ausgebildet sein, das von dem zumindest einen Magnetfelderzeuger angezogen werden kann. Für ein derartiges Gegenbauteil aus magnetischem oder magnetisierbarem Material können Eisen, Weicheisen, Stahl, insbesondere mit niedrigem Kohlenstoffanteil, Stahl mit Siliziumzusatz oder andere Stahlsorten, sowie Nickel-Eisen-Legierungen, Cobalt-Eisen-Legierungen oder anderweitige Legierungen, sowie Ferrite oder eine Mischung derselben eingesetzt werden. Des Weiteren kann der Magnetfelderzeuger komplett von einem beständigen Material, wie zum Beispiel einem Polymermaterial, umhüllt sein, so dass dadurch vorteilhaft eine Zerstörung oder Beschädigung des Magnetfelerzeugers durch Korrosion verhindert oder verringert werden kann. Auch das Gegenbauteil, das zusammen mit dem Magnetfelderzeuger die magnetische Kraftwirkung aufbaut kann ebenfalls komplett von z.B. einem Polymermaterial zum Schutz vor Zerstörung wie Korrosion umhüllt sein.

Der Magnetfelderzeuger kann schon vollständig magnetisiert bei der Montage der Ventilvorrichtung eingesetzt werden oder es kann auch nach der Montage eine Magnetisierung des dementsprechenden Bauteils vorgenommen werden. Es können ein oder mehrere Magnetfelderzeuger eingesetzt werden, die mit einem oder mehreren Gegenbauteilen aus dem entsprechenden magnetischen oder magnetisierbaren Material eine magnetische Kraftwirkung aufbauen. Es können aber auch zusätzlich oder alternativ mehrere Magnetfelderzeuger derart eingesetzt werden, dass sich zwischen zumindest zwei Magnetfelderzeuger die magnetische Kraftwirkung ergibt, die das Verschlusselement vor der Gehäuseöffnung druckdichtend fixiert. So ist es denkbar, dass das Verschlusselement selbst als Magnetfelderzeuger ausgebildet ist, so zum Beispiel als magnetisches Polymer, mit einer magnetischen Folie beschichtet, oder anderweitig mit Magnetfelderzeugern versehen. Des Weiteren kann auch zumindest einen Magnetfelderzeuger am Gehäuse oder am Rahmenelement befestigt sein. Es ist auch denkbar, dass das Gehäuse und/oder das Verschlusselement aus einem magnetischen oder magnetisierbaren Material bestehen, welches zusammen mit einem Magnetfelderzeuger die gewünschte magnetische Kraftwirkung ermöglicht. Des Weiteren ist jede beliebige Kombination der oben beschriebenen Ausführungsformen hinsichtlich der magnetischen Kraftwirkung und dementsprechender Gegenbauteil-Magnetfelderzeuger-Paarungen zulässig.

Die Form der Magnetfelderzeuger kann zylinderförmig, quaderförmig, ringförmig, bandfömig, flächig oder punktförmig verteilt sein. Ebenso ist es denkbar, einen Magnetfelderzeuger zu verwenden, der auf Basis von elektromagnetischer Induktion funktioniert. Da in dem Gehäuse eine elektrische Stromquelle angeordnet ist, ist es denkbar zumindest einen elektrischen Leitungsabschnitt derartig auszubilden, was mithilfe des in dem elektrischen Leitungsabschnitt fließenden Stromes eine elektromagnetische Induktion vorgenommen werden kann. Mithilfe der elektromagnetischen induktion kann ein Magnetfeld erzeugt werden, mithilfe dessen eine magnetische Kraftwirkung zwischen dem Verschlusselement und einer weiteren Komponente der Ventileinrichtung und/oder dem Gehäuse erzeugt werden kann.

Dabei kann der vorbestimmte Überdruck, ab dem das Verschlusselement von der Verschlussposition in die Öffnungsposition wechselt, 2 bis 8 mal größer gewählt sein, als ein während eines Normalbetriebes in dem Gehäuseinnenraum auftretender maximaler Überdruck. Dadurch kann das Verschlusselement während eines Normalbetriebes in der Verschlussposition verbleiben und bei Entwicklung von Fluiden, insbesondere während eines Störbetriebes der elektrochemischen Stromquelle, in zumindest eine Öffnungsposition wechseln.

Findet ein Wechsel des Verschlusselementes von der Verschlussposition in eine der Öffnungspositionen erst ab einem deutlich erhöhten Überdruck auf, kann vorteilhaft verhindert werden, dass während eines Normalbetriebes der elektrochemischen Stromquelle ein Öffnen der Ventileinrichtung auftritt. Demzufolge ist in diesem Betriebszustand der Gehäuseinnenraum auch gegen eventuell eintretende Fluide geschützt. Somit kann eine ausreichende Betriebssicherheit im Normalbetrieb sichergestellt werden, ohne dass in einem eventuell auftretenden Störbetrieb aufgrund von in dem Gehäuseinnenraum entwickelnden Fluiden eine Beschädigung oder Zerstörung des Gehäuses in Kauf genommen werden muss.

Demzufolge kann die Ventileinrichtung derart ausgebildet sein, dass Druckschwankungen in einem Bereich von +/- 0,5 bar ohne Öffnen der Ventilelnrichtung toleriert werden. Beispielsweise können auch Druckschwankungen von +/- 0,4 bar insbesondere von +/- 0,35 bar und gegebenenfalls von +/- 0,3 bar toleriert werden. Bevorzugt ist eine Toleranz gegenüber Druckschwankungen von +/-0,2 bar.

Dies wird durch eine magnetische Kraftwirkung sichergestellt, die ein Öffnen des Verschlusselementes ermöglicht, wenn der vorbestimmte Überdruck im Gehäuseinnenraum einen Überdruck von 0,5-1,0 bar erreicht. Beispielsweise ist auch ein vorbestimmter Überdruck von 0,55-1,0 bar insbesondere von 0,55-0,9 bar und gegebenenfalls von 0,55-0,8 bar möglich. Bevorzugt ist ein vorbestimmter Überdruck von 0,6-0,8 bar eingestellt.

Charakteristische Druckwerte für spezielle Anwendungen sind in der nachfolgenden Tabelle angegeben.

| Anwendung | maximaler Überdruck bei p Batt > p außen | maximaler Unterdruck bei p Batt < p außen |
|---|---|---|
| Auto | ca. 0,2 bar (Temperaturkompensation, Luftdruck, Berg- und Talfahrt) | 0,2 bar 2bar (Wasser, Watfähigkeit) |
| Flugzeug Back-Up (Notstrom) | ca.1 bar Start- bzw. Landevorgänge | ca.1 bar Start- bzw. Landevorgänge |
| Bahn Back-Up (Notstrom) | ca. 0,5 bar wie Auto, Tunnelfahrt | ca. 0,5 bar wie Auto, Tunnelfahrt |
| Stationär Back-Up (Notstrom) | 0,2 bar | 0,2 bar |

Beispielsweise kann der vorbestimmte Überdruck, ab dem das Verschlusselement von der Verschlussposition in die Öffnungsposition wechselt, 2 bis 6 mal größer gewählt sein, als ein während eines Normalbetriebes in dem Gehäuseinnenraum auftretender maximaler Überdruck, insbesondere 3 bis 6 mal und gegebenenfalls 3 bis 5. Bevorzugt ist der vorbestimmte Überdruck 2 bis 5 mal größer.

Derartige im Normalbetrieb auftretende, insbesondere maximale, Überdrucke können infolge einer Temperaturkompensation oder im Falle von Elektro-Kraftfahrzeugen bei Berg-und Talfahrten entstehen. Dabei ist unter einem maximalen Überdruck während des Normalbetriebes derjenige Überdruck zu verstehen der als Maximalwert auftreten kann. Unter einem Normalbetrieb ist der Betrieb der elektrochemischen Spannungsquelle zu verstehen, der nicht durch einen Störfall gekennzeichnet ist. Tritt hingegen ein Störfall auf, wie zum Beispiel das Platzen einer der Komponenten der elektrochemischen Stromquelle, so wird dieser Betriebszustand als Störbetrieb bezeichnet. Im Falle des Störbetriebes können Fluidentwicklungen auftreten, die das fünffache des freien Totvolumens in dem Gehäuseinnenraum übersteigen können. Bei derartigen Fluidentwicklungen kann es zu einer Zerstörung oder Beschädigung des Gehäuses kommen, wenn die frei werdenden Fluide nicht kontrolliert aus dem Gehäuse abgeführt werden.

Weiterhin kann die Ventilvorrichtung ein Scharnierelement aufweisen, mit dem das Verschlusselement in der jeweiligen Öffnungsposition gehalten werden kann.

Vorteilhaft an der Verwendung eines Scharnierelementes sind die Positionierung und/oder die geführte Bewegung des Verschlusselementes im Bereich der Gehäuseöffnung. Durch ein derartiges Scharnierelement kann zudem ein Abplatzen des Verschlusselementes und ein Wegschleudern desselben von dem Gehäuse verhindert werden, so dass durch das über das Scharnierelement befestigte Verschlusselement keine Verletzungsgefahr oder Schädigungsgefahr im Störfall droht. Eine Schädigung könnte durch das Durchtrennen eines Kabels auftreten. Zudem kann bei dementsprechender Positionierung des Verschlusselementes vorteilhaft ein automatisches Schließen nach erfolgtem Druckabbau bewerkstelligt werden, wobei aufgrund zum Beispiel der Schwerkraft das Verschlusselement wieder zurück in die Verschlussposition bewegbar ist, so das nach erfolgtem Druckabbau die Ventileinrichtung selbsttätig und automatisch wieder schließt. Zudem kann das Scharnierelement vorteilhaft sehr einfach aufgebaut sein, so dass es konstruktiv einfach und kostengünstig herstellbar ist.

Damit das Verschlusselement beim Öffnen der Gehäuseöffnung nicht weggeschleudert werden kann, ist das Scharnierelement vorzugsweise reißfest gegenüber plötzlicher mechanischer Belastung auszubilden. Zudem ist es vorteilhaft, wenn das Scharnierelement zur Abdichtung der Gehäuseöffnung beiträgt oder zumindest nicht kontraproduktiv die Abdichtung der Gehäuseöffnung verhindert. Dabei kann das Scharnierelement als mechanisch stabile Thermoplastfolie ausgebildet sein und/oder als, insbesondere angespritzte, Dichtung. Es kann integral mit dem Verschlusselement und/oder mit dem nachfolgend beschriebenen Rahmenelement ausgebildet sein und beispielsweise mit einem Spritzverfahren an das Verschlusselement, das Rahmenelement und/oder das Gehäuse angespritzt sein. Demzufolge kann es aus gängigen, insbesondere elastomeren Polymeren bestehen. Des Weiteren ist auch die Ausbildung des Scharnierelementes als Scharnier im herkömmlichen Sinn denkbar, wobei in diesem Fall das Scharnierelement aus Kunststoff und/oder Metall bestehen kann oder diese Materialien aufweisen kann.

Zudem kann das Scharnierelement unter einer gewissen Spannung stehen, so dass nach dem Wechsel des Verschlusselementes von der Verschlussposition in die Öffnungspositionen und nach erfolgter Druckentlastung des Gehäuseinnenraumes aufgrund der Spannung des Scharnierelementes das Verschlusselement in die Verschlussposition zurückgedrückt wird. Demzufolge trägt das Scharnierelement nur vernachlässigbar zum Anpressen des Verschlusselementes an die Gehäuseöffnung bei, so dass im Wesentlichen durch die magnetische Kraftwirkung das Verschlusselement druckdicht an die Gehäuseöffnung gepresst wird. Vorteilhaft kann aber durch die Spannung des Dichtelementes ein automatischer, selbstständiger Wiederverschluss der Gehäuseöffnung nach der Druckentlastung ermöglicht werden.

Des Weiteren kann die Ventilvorrichtung ein Rahmenelement aufweisen, mit dem die Ventilvorrichtung an dem Gehäuse befestigbar ist.

Vorteilhaft kann durch die Verwendung eines Rahmenelementes die Gehäuseöffnung derart ausgestaltet werden, dass ein druckdichter Verschluss der Gehäuseöffnung sichergestellt werden kann.

Dabei ist das Rahmenelement integral mit dem Gehäuse auslegbar oder als separates in die Gehäuseöffnung einsetzbares Bauteil ausführbar. Im Falle der integralen Ausbildung mit dem Gehäuse kann das Rahmenelement aus dem Gehäuse mit einem dementsprechenden Umformverfahren, wie zum Beispiel Stanzen, Pressumformen, gegebenenfalls bei erhöhter Temperatur, Bördeln oder dergleichen hergestellt werden. Es ist auch denkbar an die Gehäuseöffnung das Rahmenelement mittels eines Anspritzverfahrens anzuspritzen, wobei in diesem Fall Materialien wie Polymere, Metalle oder Keramiken für das Material zum Einsatz kommen können. Im Falle von Keramiken kann vorteilhaft eine Isolierung der Gehäuseöffnung dargestellt werden.

Ist das Rahmenelement als separates Bauteil ausgebildet, so kann es und gegebenenfalls sogar die ganze Ventileinrichtung, wenn sie defekt ist, problemlos ausgetauscht werden. So kann das Rahmenelement einteilig oder mehrteilig ausgebildet sein. Zur Befestigung des Rahmenelementes in der Gehäuseöffnung kann das Rahmenelement eine in der Ebene der Öffnung verlaufende Umlaufnut aufweisen, die die Gehäuseöffnung beidseitig umgreift, und die teilweise unterbrochen ausgebildet sein kann. Mithilfe dieser Umlaufnut kann das Rahmenelement in der Gehäuseöffnung fixiert werden. Es ist auch möglich das Rahmenelement zumindest zweiteilig auszugestalten, wobei zumindest ein Teil des Rahmenelementes außerhalb des Gehäuses angeordnet wird, während zumindest ein zweites Teil des Rahmenelementes innerhalb des Gehäuses positioniert wird. Durch Verbinden der beiden Teile des Rahmenelementes durch zum Beispiel Verrasten, Verclipsen, Verkleben, Verschweißen oder dergleichen kann das Rahmenelement in der Gehäuseöffnung fixiert werden. Zur Abdichtung kann zwischen dem Rahmenelement und der Gehäusewandung einseitig oder beidseitig eine Dichtung angebracht sein, oder das Rahmenelement kann mit dem Gehäuse verklebt oder verschweißt sein.

Des Weiteren kann das Rahmenelement als selbstständiges Bauteil oder auch aus dem Gehäuse ausgeformt, eine zumindest teilweise umlaufende, nach außen geöffnete Nut aufweisen, in die ein nachfolgend beschriebenes Dichtungselement einsetzbar ist. Weiterhin kann der Rahmen auch noch weitere Aussparungen zur Aufnahme von Magnetfelderzeugern aufweisen.

Dabei kann die Ventilvorrichtung zumindest ein Dichtungselement aufweisen. Wird ein Dichtungselement verwendet, so kann mithilfe des Dichtungselementes konstruktiv einfach die Dichtigkeit der Ventileinrichtung sichergestellt werden. Dabei kann durch die magnetische Kraftwirkung das Verschlusselement so auf das Dichtungselement gepresst werden, dass die Ventileinrichtung bis zu einem vorbestimmten Überdruck im Gehäuseinnenraum druckdicht verschlossen ist. Zudem kann durch Verwendung des Dichtungselementes auch verhindert werden, dass Fluide von außen in den Gehäuseinnenraum eindringen können. Somit können mit dieser Vorrichtung beispielsweise die Anforderungen der Schutzklasse IP 67 erfüllt werden.

Vorteilhaft weist das Material des Dichtungselementes eine Resistenz gegenüber Reinigungsmedien, wie sie zum Beispiel in Autowaschstraßen verwendet werden, und/oder gegenüber Ölkomponenten auf. Zum anderen kann durch das Dichtungselement auch ein Toleranzausgleich des Materials des Verschlusselementes gegenüber dem Rahmenelement oder dem Gehäuse erreicht werden. Dieser Toleranzausgleich kann gegebenenfalls auch die unterschiedlichen Wärmeausdehnungkoeffizienten berücksichtigen. Das Dichtungselement kann in Art eines Dichtungsrings oder in Art eines Formbauteils ausgebildet sein. Auch ist die Ausbildung des Dichtungselementes als Dichtungslamelle oder Dichtungslippe denkbar. Zudem können auch mehr als ein Dichtungslement verwendet werden, so zum Beispiel eine Dichtung Ring und zusätzlich zu dem Dichtungsring umlaufende Dichtungslamellen oder Dichtungslippen.

Das Dichtungselement kann in einer wie zuvor beschriebenen Nut angeordnet sein und in demzufolge am Rahmenelement oder an einer am Gehäuse ausgebildeten Nut, sowie am Rahmenelement oder am Gehäuse direkt aufgebracht, zum Beispiel aufgespritzt, sein. Des Weiteren ist auch denkbar, das Dichtungselement an dem Verschlusselement anzuordnen, oder eine beliebige Kombination der vorgeschriebenen Anordnungen und Ausbildungen anzuwenden.

Das Dichtungselement kann als aufvulkanisiertes Elastomer, im Raupenauftragsverfahren aufgetragenes Elastomer, als extrudiertes thermoplastisches Elastomer (TPE), thermoplastisches Polyurethan (TPU), aufgeklebtes Elastomer, aufgeklebtes thermoplastisches Elastomer, als Vollmaterial oder als geschlossenporiger Schaum ausgebildet sein.

Im Falle der Ausbildung als Elastomer können Elastomere, wie Nitril-Butadien-Kautschuk (NBR), hydrierter Nitril-Butadien-Kautschuk (HNBR), Ethylen-Propylen-Dien-Kautschuk (EPDM), Fluor-Kautschuk (FKM), Acrylat-Kautschuk (ACM) oder Silikon-Kautschuk (VMQ) verwendet werden:
Das Material des Dichtungselementes kann magnetische Partikel aufweisen. Vorteilhaft ist durch die Einbettung von magnetischen Partikeln in das Dichtungselement das magnetische Material zumindest gegen Korrosion geschützt. Es können in das Dichtungselement auch Metallpartikel eingelagert sein, mit denen dann der Magnetfelderzeugern in Wechselwirkung treten kann.
Jedenfalls ist es denkbar, dass das Dichtungselement elektrisch leitende Partikel enthält oder als elektrisch leitender Kunststoff ausgebildet ist. Dadurch kann ein Austreten und/oder ein Eintritt von Störfeldern aus dem Gehäuseinnenraum beziehungsweise in den Gehäuseinnenraum zumindest verringert werden. Demzufolge kann auch durch das Dichtungselement die EMV-Verträglichkeit erhöht werden.

Die Ventilvorrichtung kann ein Spannelement aufweisen, mit der das Verschlusselement von der zumindest einen Öffnungsposition in die Verschlussposition überführt werden kann.

Vorteilhaft kann durch Verwendung eines Spannelementes das Verschlusselement kontrolliert von einer Öffnungsposition wieder in die Verschlussposition rückgeführt werden.

Es ist zum Einen möglich die Ventileinrichtung derartig an dem Gehäuse zu positionieren, dass eine derartige Rückführung des Verschlusselementes von einer Öffnungsposition in die Verschlussposition auch durch die Schwerkraft erreicht werden kann. Dies kann zudem unterstützt werden, wie zuvor beschrieben, mittels eines unter Spannung stehenden Scharnierelementes, Zusätzlich oder alternativ dazu kann jedoch auch ein Spannelement vorgesehen sein, mittels indem das Verschlusselement von einer Öffnungsposition in die Verschlussposition überführt werden kann. Ein derartiges Spannelement kann als Federelement oder als Dehnelement aus gebildet sein. Wird somit durch Erreichen oder Überschreiten des vorbestimmten Überdrucks das Verschlusselement von der Verschlussposition in einer Öffnungsposition gebracht, so wird in diesem Fall das Spannelement derart unter Spannung gesetzt, dass die im Spannelement gespeicherte mechanische Energie nach Druckabbau dazu führt, dass das Verschlusselement von einer Öffnungsposition in die Verschlussposition zurückgeführt wird. Ist dies geschehen, so kann aufgrund des vorteilhaften Abstandes des Verschlusselementes zur Gehäuseöffnung die magnetische Kraftwirkung bewirken, dass das Verschlusselement auf die Gehäuseöffnung gepresst wird. Das Spannelement kann demzufolge aus Materialien wie Metallen oder Elastomeren hergestellt sein.

Zudem kann die Ventilvorrichtung ein Sensorelement aufweisen, mit der ein aufgetretenes Öffnen des Verschlusselementes angezeigt werden kann.

Vorteilhaft kann durch die Verwendung eines Sensorelementes ein aufgetretenes Öffnen des Verschlusselementes beziehungsweise der Ventileinrichtung angezeigt werden.

Dabei kann das Sensorelement optisch, haptisch, akustisch und/oder elektrisch ausgebildet sein. Im Falle der optischen Ausbildung des Sensorelementes kann durch das Sensorelement einem Benutzer optisch mitgetellt werden, zum Beispiel infolge einer Verfärbung oder dergleichen, dass die Ventilvorrichtung geöffnet worden ist. Des Weiteren ist auch ein derartiges Öffnen der Ventileinrichtung durch ein haptisches Signal möglich oder im Falle von entweichenden Gasen akustisch zum Beispiel durch ein Pfeifen anzeigbar. Das Sensorelement kann auch elektrisch ausgebildet sein, so dass ein Öffnen des Verschlusselementes einer Signalverarbeitungs-Einrichtung angezeigt werden kann. Dabei kann die Signalverarbeitungs-Einrichtung zum Beispiel die Motorsteuerung oder die Bordelektronik eines Kraftfahrzeuges sein.

Ein besonders einfaches Sensorelement ist ein Siegel, welches ein "sich im geöffneten Zustand befindendes" Ventil anzeigt.

Weiterhin kann die Ventilvorrichtung zumindest ein Dämpfungselement aufweisen, mit der eine Kraftwirkung bei einem Wechsel des Verschlusselementes zwischen den Positionen gedämpft werden kann.

Vorteilhaft an der Verwendung eines Dämpfungselementes können aufgrund der auftretenden Kraftwirkungen, die sich bei Austreten der in dem Gehäuse Innenraum entstandenen Fluide einstellen können, Zerstörungen oder Beschädigungen an der Ventilelnrichtung und/oder am Gehäuse vermieden werden. Dabei kann das Dämpfungselement als Schaum auf dem Gehäuse, dem Rahmenelement und/oder dem Verschlusselement ausgebildet sein. Somit kann im Falle der Verwendung eines Scharnierelementes ein Flattem beziehungsweise Klappern des Verschlusselementes derart abgemildert werden, dass Beschädigungen am Gehäuse oder am Verschlusselement vermieden werden können. Ebenso kann im Falle eines Schließens des Verschlusselementes aufgrund der magnetischen Kraftwirkung durch die Verwendung eines Dämpfungselementes eine Abdämpfung des Schließprozesse erreicht werden. Dabei ist es auch denkbar, dass das Dichtungselement zusätzlich oder alternativ zu dem Dämpfungselement ebenfalls eine derartige Dämpfung der Funktion übemimmt.

Die Ventilvorrichtung kann zudem ein Stabilisierungselement aufweisen, mit dem unter anderem das Rahmenelement, insbesondere gegen mechanische Verformungen stabilisiert werden kann.

Vorteilhaft an dem Einsatz eines Stabilisierungselementes in das Rahmenelement kann das Rahmenelement, insbesondere gegenüber mechanische Verformung, stabilisiert werden. Zudem ist bei metallischer Ausbildung des Stabilisierungselementes zwischen dem Stabilisierungselement unter dem zumindest einen Magnetfelderzeugern eine magnetische Kraftwirkung darstellbar. Des Weiteren kann vorteilhaft an das Stabilisierungselement das Spannelement angebunden werden, so dass durch das dehnende Spannen des Spannelementes im Falle des Wechsels des Verschlusselementes von der Verschlussposition in eine Öffnungsposition mechanische Energie in dem Spannelement zum Wiederverschluss der Gehäuseöffnung gespeichert werden kann. Dabei ist das Stabilisierungselement vorzugsweise in oder an dem Rahmenelement befestigt oder integral mit demselben ausgebildet. Vorzugsweise ist das Stabilisierungselement in den Gehäuseinnenraum hineinragend in dem Rahmenelement angeordnet. Ein derartiges Stabilisierungselement kann auch aus dem Gehäusematerial durch dementsprechende Umformverfahren ausgebildet werden. Demzufolge kann das Stabilisierungselement in das Rahmenelement eingesetzt sein oder das Rahmenelement in das Stabilisierungselement.

Die Ventilvorrichtung kann ein Filterelement aufweisen, mit dem austretende Fluide gefiltert werden können.

Durch ein Filterelement können vorteilhafte außertretende Fluide von der für die Umgebung schädlichen Bestandteilen befreit werden. Dabei kann das

Filterelement als Vlies, als Festkörper-Schüttung oder dergleichen ausgebildet sein. Es kann schädliche Bestandteile der austretenden Fluide binden oder aber absorbieren. Demzufolge kann es Aktivkohle, Trockenmittel, Säurebinder, Laugenbinder oder dergleichen aufweisen.

Die Ventilvorrichtung kann mit einem Kopplungselement ausgestattet sein, an das eine Abführleitung für die austretende Fluide angekoppelt werden kann.

Vorteilhaft kann durch ein Kopplungselement und eine mit dem Kopplungselement verbundene Abführleitung eventuell außertretende Fluide zielgerichtet in einen Bereich abgeführt werden, indem eventuell schädigende Wirkungen der Fluide und bedenklich sind.

So kann das Kopplungselement als Rohr, als Schlauch, als Stutzen, in Art eines Bajonettverstoßes, als Schraubverbindung, als Steckverbindung oder dergleichen ausgebildet sein. Im Falle der Verwendung einer Abführleitung ist es auch denkbar, dass die Ventileinrichtung nicht am Gehäuse selbst angebracht Ist, sondern vom Gehäuse beabstandet in der Abführleitung positioniert ist.

In einem weiteren Aspekt der Erfindung wird ein Gehäuse für eine elektrochemische Stromquelle mit einer magnetischen Ventileinrichtung vorgeschlagen. Dabei kann die magnetische Ventileinrichtung wie zuvor beschrieben ausgebildet sein.

Mittels einer derartigen magnetischen Ventileinrichtung wie zuvor beschrieben kann ein Gehäuse für eine elektrochemische Stromquelle betriebssicher auch im Störbetrieb ausgebildet werden. Dabei ist das Gehäuse druckdicht während eines Normalbetriebes verschließbar, so dass eventuell im Außenbereich des Gehäuses auftretende Fluide nicht in den Gehäuseinnenraum gelangen können, da die Ventileinrichtung kleinerer Druckschwankungen tolerierend erst dann eröffnet, wenn ein vorbestimmten Überdruck im Gehäuse Innenraum erreicht oder überschritten wird. Zudem ist das Gehäuse trotz seiner hohen Betriebssicherheit konstruktiv einfach ausgebindet und auch im Störfall zerstörungssicher, da zudem keine abgesprengten Teile Beschädigungen verursachen können und es ist zudem störunanfällig sowohl für den Normalbetrieb als auch für den Störbetrieb ausgebildet, da die magnetische Kraftwirkung auch nach langen Jahren des Gebrauches nur eine geringfügige, zu vernachlässigende Abschwächung erleidet

Das Gehäuse kann dabei zur Aufnahme einer elektrochemischen Stromquelle dienen. Demzufolge kann das Gehäuse zusätzlich zu der Ventileinrichtung auch elektrische Anschlusseinrichtungen und gegebenenfalls Anschlusseinrichtungen für ein Kühlsystem aufweisen. In dem Gehäuse, in der Gehäusewandung und/oder außen am Gehäuse können zudem Kühlleitungen zum Kühlen der elektrochemischen Stromquelle angeordnet sein. Des Weiteren kann das Gehäuse noch weitere Öffnungen aufweisen, über die einzelne Komponenten der elektrochemischen Stromquelle in das Gehäuse installiert oder aus dem Gehäuse entfernt werden können. Solche Gehäuse für elektrochemische Stromquelle können aus Metall, Metalllegierungen und/oder Kunststoffen hergestellt sein. Als Metalle können Stahl, Aluminium, Aluminiumlegierungen oder dergleichen zum Einsatz kommen. Als Kunststoffmaterialien haben sich Polyamid oder Polybutylentherephthalat bewährt. Die Wandstärke des Gehäuses kann 1 bis 10 mm dick sein und ein Innenvolumen von 1 bis zu 1000 I aufweisen.

Dabei kann ein Verhältnis aus Öffnungsquerschnitt/Totvolumen des Gehäuseinnenraums mindestens 0,2 cm²/l betragen.

Durch ein dementsprechendes Verhältnis aus Öffnungsquerschnitt/Totvolumen des Gehäuseinnenraumes kann eine weiche Abführung des unter Überdruck stehenden, im Gehäuseinnenraum entstandenen Fluides sichergestellt werden. Zudem ist mit derartigen Öffnungsquerschnitten auch einige zügige Ableitung der Fluide aus dem Gehäuseinnenraum ermöglicht. So können bei einem internen Kurzschluss bei zum Beispiel einem 40 Ah-Akkumulator freiwerdende Gase ein Volumen im Bereich von 1001 aufweisen. Bei einem möglichen Totvolumen eines in diesem Bereich einsetzbaren Gehäuses von 20l würde sich innerhalb kürzester Zeit ein Überdruck von 5 bar aufbauen. Zwar wird die vorhergehend beschriebene Ventileinrichtung bei einem früheren Druck auslösen, jedoch ist es aufgrund der Menge an entstehenden Fluiden vorteilhaft, die Gehäuseöffnung derart zu dimensionieren, dass ein weiches und zügiges Abführen der in dem Gehäuseinnenraum entstehenden Fluide möglich ist.

Dabei versteht man unter Totvolumen des Gehäuses dasjenige Volumen, das frei zur Verfügung steht und nicht von Komponenten der elektrochemischen Stromquelle vereinnahmt ist. Somit stellt das Totvolumen dasjenige Volumen im Gehäuseinnenraum dar, indem sich die entstehenden Fluide sammeln beziehungsweise aufhalten können.

Als weiterer Aspekt der Erfindung wird eine elektrochemische Stromquelle mit einem eine magnetische Ventilvorrichtung aufweisenden Gehäuse vorgeschlagen. Die magnetische Ventilvorrichtung und/oder das Gehäuse können wie zuvor beschrieben ausgebildet sein.

Eine elektrochemische Stromquelle, die mit einem derartigen Gehäuse ausgestattet wird, ist auch betriebssicher In einem Störbetrieb, da bei einem Störfall in der elektrischen Stromquelle hinsichtlich der sich entwickelnden Fluide die Abführung derselben beherrschbar ausgebildet ist. Zudem ist vorteilhaft nach einem derartigen aufgetretenen Störfall die weitere Betriebssicherheit hinsichtlich des Eindringlings von Fluiden In den Gehäuseinnenraum auf konstruktiv einfache und zuverlässige Weise sichergestellt.

Ein weiterer Aspekt der Erfindung kann die Verwendung einer magnetischen Ventileinrichtung für Gehäuse, in denen Druckschwankungen auftreten können, für chemische Reaktoren, für Batteriegehäuse, für Doppelschichtkondensatorengehäuse oder für Brennstoffzellengehäuse sein. Dabei kann die magnetische Ventileinrichtung wie zuvor beschrieben ausgebildet sein.

Vorteilhaft können derartige magnetische Ventileinrichtungen in Gehäuse für elektrische Stromquellen aber auch im Bereich chemischer oder biochemischer Reaktoren eingesetzt werden. Prinzipiell ist der Einsatz in allen Bereichen denkbar, in denen aufgrund von entstehenden Fluiden ein Druckaufbau zu einer Zerstörung des Gehäuses oder der Vorrichtung führen kann, was durch die magnetische Ventileinrichtung vermieden werden kann. Dabei ist ein kontrolliertes Abführen der Gase ohne eine Gefährdung für die Umgebung durch eine derartige magnetische Ventileinrichtung erreichbar.

Des Weiteren ist ein Einsatz in Transportbehältem für neue und insbesondere gebrauchte/ schadhafte Zellen bzw. Batterien möglich. Hier muss sichergestellt werden, dass bei einer störfallbegründeten Freisetzung von Gasen der nachfolgende plötzliche Druckanstieg nicht zu einem Bersten des Transportbehälters führt. Dies ist insbesondere riskant, wenn Zellen bzw. Batterien mit einem Flugzeug transportiert werden.

### Kurzbeschreibung der Zeichnung

Es zeigen, jeweils schematisch:
- Fig. 1: eine elektrochemische Stromquelle mit einem Gehäuse und einer magnetischen Ventileinrichtung,
- Fig. 2: eine magnetische Ventileinrichtung mit einem Verschlusselement, einem Rahmenelement, einem Dichtungselement und einem Magnetfelderzeuger,
- Fig. 3: eine Anordnung des Dichtungselementes und des Magnetfelderzeugers auf einem Rahmenelement,
- Fig. 4: einen Schnitt durch das Rahmenelement im Bereich der Gehäuseöffnung,
- Fig. 5: das über ein Scharnierelement mit dem Rahmenelement verbundene Verschlusselement,
- Fig. 6: die magnetische Ventileinrichtung mit einem am Verschlusselement umlaufenden Dichtungselement,
- Fig. 7: die Ventileinrichtung mit mehreren punktuell angeordneten Magnetfelderzeugem,
- Fig. 8: die Ventileinrichtung mit einem als Magnetfelderzeuger ausgebildetem Dichtungselement,
- Fig. 9: eine Anordnung des als Magnetfelderzeugers ausgebildeten Dichtungselementes auf dem Rahmenelement,
- Fig. 10: die magnetische Ventileinrichtung mit einem metallischen Stabilisierungselement,
- Fig. 11: die magnetische Ventileinrichtung mit ringförmigen oder punktuellen Magnetfelderzeugern und dem metallischen Stabilisierungselement,
- Fig. 12: eine dreidimensionale Abbildung der in Fig. 10 und Fig. 11 gezeigten Ausführungsform,
- Fig. 13: ein möglicher Überdruckverlauf in einem Gehäuseinnenraum des Gehäuses,
- Fig. 14: eine mögliche Ausbildung eines Magnetfelderzeugers zum Beispiel für die in Fig. 10 bis Fig. 12 gezeigten Ausführungsformen.

### Ausführung der Erfindung

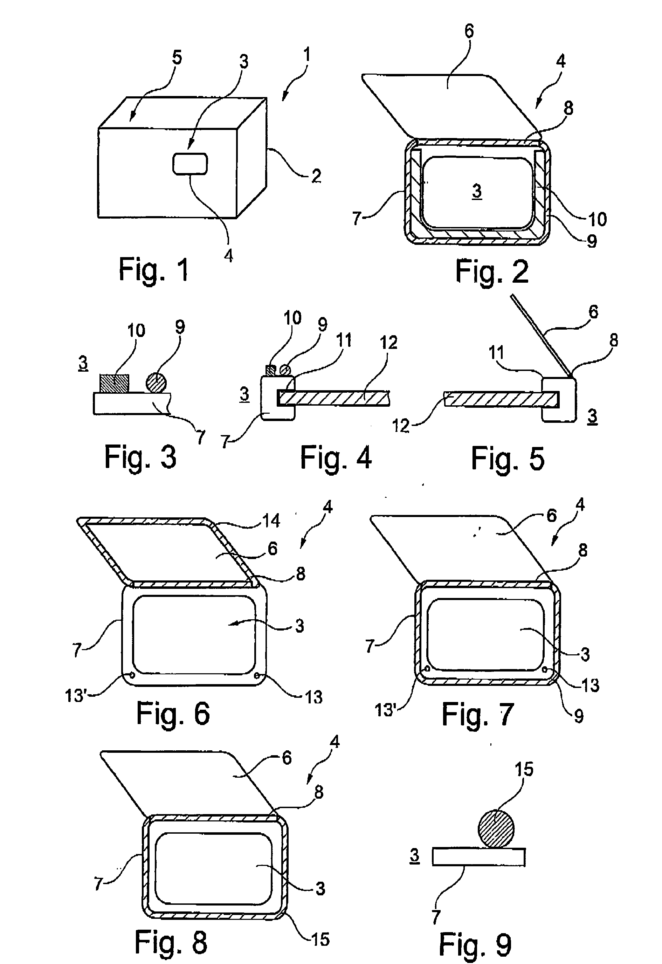

In Fig. 1 ist eine elektrochemische Stromquelle 1 dargestellt, die mit einem Gehäuse 2 ausgestaltet ist, in dessen Gehäuseöffnung 3 eine magnetische Ventileinrichtung 4 eingesetzt ist. Dabei kann die elektrochemische Stromquelle 1 als Komponente zumindest einen elektrochemischen Stromerzeuger und/oder zumindest einen elektrochemischen Energiespeicher aufweisen, wobei die Komponenten der elektrochemischen Stromquelle 1 in einem Gehäuseinnenraum 5 angeordnet sind.

Die in Fig. 2 gezeigte magnetische Ventileinrichtung 4 weist ein als Deckel oder Klappe ausgebildetes Verschlusselement 6 auf. Des Weiteren ist die magnetische Ventileinrichtung 4 mit einem Rahmenelement 7 ausgestattet, mit dem die magnetische Ventileinrichtung 4 in der Gehäuseöffnung 3 fixiert werden kann. Des Weiteren ist das Verschlusselement 6 mit dem Rahmenelement 7 über ein Scharnierelement 8 miteinander verbunden, wobei das Scharnierelement 8 derartig ausgebildet, dass das Verschlusselement 6 von der Gehäuseöffnung 3 wegklappen kann und demzufolge die Gehäuseöffnung 3 öffnet beziehungsweise freigibt.

Zudem ist die magnetische Ventileinrichtung 4 mit einem Dichtungselement 9 und einem Magnetfelderzeuger 10 ausgestattet. Der Magnetfelderzeuger 10 ist dabei zwischen dem Dichtungselement 9 und der Gehäuseöffnung 3 auf dem Rahmenelement 7 positioniert. Es ist jedoch auch eine umgekehrte Anordnung des Dichtungselementes 9 und des Magnetfelderzeugers 10 zueinander denkbar. Sowohl das Dichtungselement 9 als auch der Magnetfelderzeuger 10 sind mit dem Rahmenelement 7 fest verbunden. Dabei kann das Rahmenelement 7 eine oder mehrere in der Fig. 2 nicht gezeigte Nuten aufweisen, in denen das Dichtungselement 9 und/oder der Magnetfelderzeuger 10 eingesetzt sind. Das Dichtungselement 9 kann als Elastomer ausgebildet sein, während der Magnetfelderzeuger 10 als Magnetband, Magnetfolie oder dergleichen ausgebildet sein kann. Das Dichtungselement 9 kann umlaufend auf dem Rahmenelement 7 angeordnet sein oder zusammen mit dem Schamlerelement 8 eine Druckdichtheit der Ventileinrichtung sicherstellen.

Fig. 3 zeigt die Anordnung und eine mögliche Ausformung des Dichtungselementes 9 und des Magnetfelderzeugers 10 auf dem Rahmenelement 7. So kann das Dichtungselement 9 im Querschnitt rund ausgebildet sein, während der Magnetfelderzeuger 10 einen eckigen, insbesondere rechteckigen Querschnitt aufweisen kann.

Das in der Fig. 4 gezeigte Rahmenelement 7 weist eine Umlaufsnut 11 auf, mit dem das Rahmenelement 7 in der Gehäuseöffnung 3 positioniert und fixiert werden kann. Dabei wird in Einbaulage die Umlaufsnut 11 zumindest teilweise von einer Gehäusewandung 12 ausgefüllt.

In der Fig. 5 ist zur weiteren Verdeutlichung das Rahmenelement 7 mit seiner Umlaufsnut 11 und dem über das Scharnierelement 8 verbundenen Verschlusselement 6 in Einbaulage mit der Gehäuseöffnung 3 dargestellt, wobei wiederum die Gehäusewandung 12 die Umlaufsnut 11 ausfüllt.

Die in Fig. 6 gezeigte Ausführungsform einer magnetischen Ventileinrichtung 4 weist ein Rahmenelement 7 auf, das über ein Scharnierelement 8 mit dem Verschlusselement 6 verbunden ist. Im Rahmenelement 7 sind mehrere punktuelle Magnetfelderzeuger 13,13' angeordnet und das Verschlusselement 6 ist mit einem Dichtungselement 14 ausgestattet. Vorzugsweise ist das Dichtungselement 14 in dieser Ausführungsform als Dichtlippe oder Dichtlamelle ausgebildet. Dabei ist in dieser Ausführungsform das Material des Verschlusselementes 6 derart zu wählen, dass zwischen den punktuellen Magnetfelderzeugern 13,13' und dem Verschlusselement 6 eine magnetische Kraftwirkung auftreten kann.

Die in Fig. 7 gezeigte magnetische Ventileinrichtung 4 weist ebenfalls ein Rahmenelement 7 auf, das über ein Scharnierelement 8 mit einem Verschlusselement 6 verbunden ist. In dem Rahmenelement 7 sind mehrere punktuelle Magnetfelderzeuger 13,13` positioniert, die zusammen mit dem Verschlusselement 6 eine magnetische Kraftwirkung ausbilden können. Demzufolge muss auch in dieser Ausführungsform das Verschlusselement 6 aus einem dementsprechenden Material hergestellt sein. Des Weiteren ist an dem Rahmenelement 7 eine Dichtungselement 9 angeordnet, mithilfe dessen ein druckdichter Verschluss der Gehäuseöffnung 3 sichergestellt werden kann.

In der Fig. 8 ist eine magnetische Ventileinrichtung 4 dargestellt, die ebenfalls ein Rahmenelement 7 aufweist, das mittels eines Scharnierelementes 8 mit dem Verschlusselement 6 verbunden ist. An dem Rahmenelement 7 ist ein magnetisches Dichtungselement 15 positioniert, dass sowohl als Dichtungselement als auch als Magnetfelderzeuger fungiert. Demzufolge tritt auch in dieser Ausführungsform eine magnetische Kraftwirkung zwischen dem magnetischen Dichtungselement 15 unter dem Verschlusselement 6 auf, wobei das Verschlusselement 6 aus einem dementsprechenden Material hergestellt sein muss. Das Dichtungselement 15 kann deshalb permanentmagnetisches Material aufweisen.

Fig. 9 zeigt die Anordnung des Dichtungselementes 15 auf dem Rahmenelement 7. Das Dichtungselement 15 weist einen runden Querschnitt auf. In diesem Fall sind die magnetfelderzeugenden Komponenten in das Dichtungselement integriert.

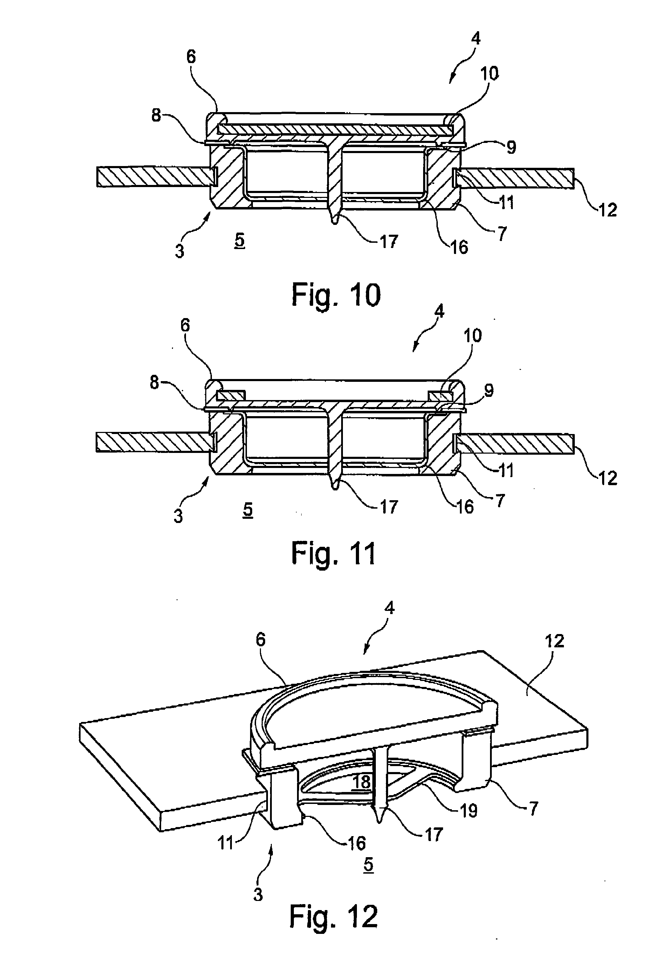

In der Fig. 10 ist eine magnetische Ventileinrichtung 4 in Einbaulage mit der Gehäuseöffnung 3 dargestellt. Sie ist mit einem Rahmenelement 7 ausgestattet, welches eine Umlaufsnut 11 aufweist, die von der Gehäusewandung 12 ausgefüllt wird. Auch weist die magnetische Ventileinrichtung 4 ein über ein Scharnierelement 8 verbundenes Verschlusselement 6 auf. Des Weiteren ist am Verschlusselement 6 ein Dichtungselement 9 angeordnet, das in Form einer Dichtungslippe oder Dichtungslamelle ausgebildet ist. In das Rahmenelement 7 ist ein Stabilisierungselement 16 eingesetzt, das bevorzugt metallisch ausgebildet ist. Das Verschlusselement 6 ist mit einem Magnetfelderzeuger 10 ausgestattet. In dieser Ausführungsform tritt die magnetische Kraftwirkung zwischen dem Magnetfelderzeuger 10 unter dem Stabilisierungselement 16 auf. Des Weiteren ist das Verschlusselement 6 über ein Spannelement 17 in Form eines Nippels mit dem Stabilisierungselement 16 verbunden. Wechselt nun das Verschlusselement 6 von seiner Verschlussposition in eine Öffnungsposition, so wird das Spannelement 17 unter Spannung gesetzt. Nach erfolgtem Druckabbau überführt das Spannelement 17 das Verschlusselement 6 von der Öffnungsposition wieder zurück in seiner Verschlussposition. In der Verschlussposition wird die Ventileinrichtung 4 aufgrund einer zwischen dem Magnetfelderzeuger 10 und dem Stabilisierungselement 16 auftretenden Kraftwirkung wieder druckdicht verschlossen.

In Fig. 11 ist eine Ausführungsform dargestellt, die sich von der Ausführungsform der Fig. 10 dadurch unterscheidet, dass als Magnetfelderzeuger 10 kein flächiger Magnetfelderzeuger 10 verwendet wird, sondern eine Iochscheibenförmiger Magnetfelderzeuger 10 oder punktuelle Magnetfelderzeuger 13,13'.

In Fig. 12 ist die magnetische Ventileinrichtung 4 der Figuren 10, 11 dreidimensional dargestellt, um die Einbaulage der magnetischen Ventileinrichtung 4 besser zu verdeutlichen. Dabei kann festgestellt werden, dass das Stabilisierungselement 16 derart ausgebildet ist, dass es zum Gehäuseinnenraum 5 hin orientiert mehrere Aussparungen 18 aufweist. Aufgrund dieser Aussparungen 18 ist ein Ausströmen von ihm Gehäuse Innenraum 5 entstehenden Fluiden durch das Stabilisierungselement 16 hindurch ermöglicht. Aufgrund der Aussparungen und damit das Spannelement 17 mit dem Stabilisierungselement 16 verbunden werden kann, sind mehrere Stege 19 ausgebildet, die in der Mitte der Gehäuseöffnung 3 zusammengeführt sind, so dass an der Verbindungsstelle der Stege 19 das Spannelement 17 mit dem Stabilisierungselement 16 verbunden werden kann.

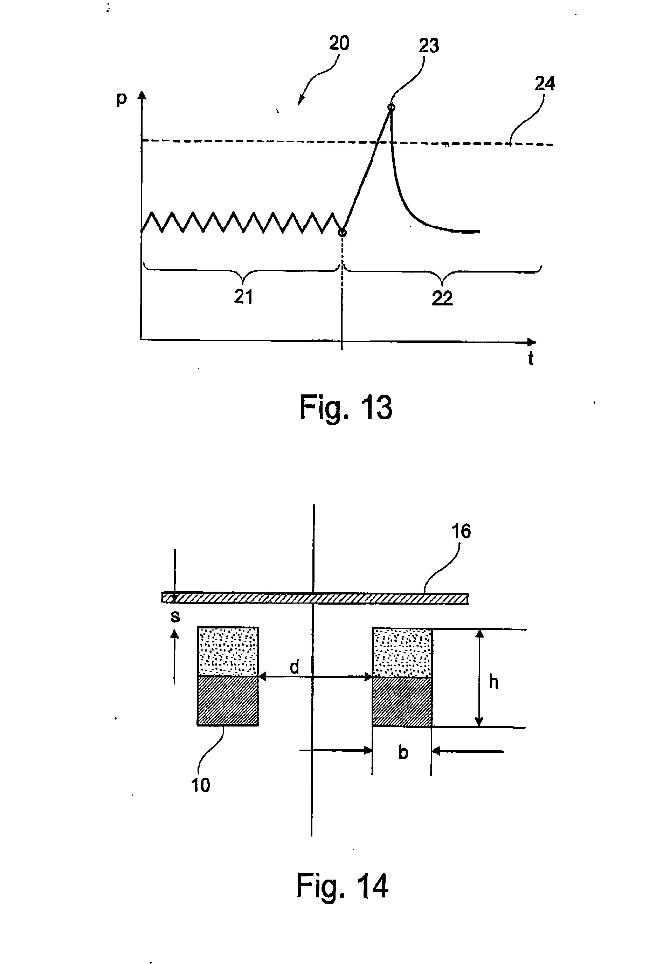

Die Fig. 13 verdeutlicht einen möglichen Druckverlauf 20 im Gehäuseinnenraum 5. Dem Druckverlauf 20 kann entnommen werden, dass in einem Normalbetrieb 21 kleinere Druckschwankungen auftreten können. Demzufolge ist die magnetische Ventileinrichtung 4 derart ausgebildet, dass sie derartige im Normalbetrieb 21 auf tretende Druckschwankungen toleriert, ohne dass sie sich öffnet. Eine im Gegensatz zu dem Normalbetrieb 21 in einem Störbetrieb 22 auf tretende Druckschwankung 23 kann jedoch so groß werden, dass sie einen vorbestimmten Überdruck 24, ab dem die magnetische Ventileinrichtung 4 von ihrer Verschlussposition in eine Öffnungsposition wechselt, erreicht oder überschreitet. In diesem Fall öffnete sich die magnetische Ventileinrichtung 4 und das in dem Gehäuseinnenraum 5 entstandene Fluid kann kontrolliert entweichen, ohne dass eine Zerstörung oder Beschädigung des Gehäuses 2 eintritt. Nach dem Öffnen der magnetischen Ventileinrichtung 4 kann der Druck noch kurzzeitig ansteigen, fällt jedoch danach auf Normalniveau ab.

In Fig. 14 ist nun eine mögliche Ausführungsform eines Magnetfelderzeugers 10 für die in der Fig. 11 gezeigten Ausführungsform einer magnetischen Ventileinrichtung 4 dargestellt. Dabei ist der Magnetfelderzeuger 10 ringförmig ausgebildet und aufgrund des in Fig. 14 nicht dargestellten Dichtungselementes 9 von dem metallischen Stabilisierungselement 16 mit dem Abstand s beabstandet angeordnet. Dabei weist der ringförmige Magnetfelderzeuger 10 eine Höhe h, eine Breite b des Ringes und einen Innendurchmesser d auf. Damit der Magnetfelderzeuger 10 eine ausreichend hohe magnetische Kraftwirkung auf das Stabilisierungselement 16 ausübt, kann das magnetische Material des Magnetfelderzeugers 10, der Anteil an magnetischen Material in dem Magnetfelderzeuger 10, der als magnetisches Polymer ausgebildet sein kann, die Breite b, die Höhe h und der Abstand s variiert werden.

Die nachfolgenden Ausführungsbeispiele zeigen Variationen des vorhergehend beschriebenen Magnetfelderzeugers 10 und die daraus resultierenden Ergebnisse. Dabei sind die Werte für die Kräfte mathematisch bestimmt.

Beispiel: Variation des Magnetfelderzeugers gemäß Fig. 14 Es wird ein Ring mit einem Innendurchmesser d von 36 mm verwendet. F1 ist die Kraft, bis zu der die magnetische Ventileinrichtung geschlossen ist und F2 die Kraft, ab der eine Öffnung eintritt. "-" bedeutet ein negatives Ergebnis und "+" ein positives. Verwendete Werkstoffe (Remanenzen in mT):
1 Barlumferrit isotrop (210)
2 Bariumferrit anisotrop (390)
3 Strontiumferrit anisotrop (350)
4 AlNiCo 500 Samarium-Cobalt SM 18 (1120)
5 SmCo₅ Samarium-Cobalt SM 24 (850)
6 Sm₂Co₁₇ (100)
7 Neodym-Eisen-Bor NdFeB (1180)

| Werkstoff | Anteil [%] | h [mm] | b [mm] | s [mm] | F1 | F2 | Ergebnis |
|---|---|---|---|---|---|---|---|
| 1 | 70 | 4 | 6 | 0,1 | 2 | 3 | - |
| 2 | 70 | 4 | 6 | 0,1 | 7 | 8 | - |
| 3 | 70 | 4 | 6 | 0,1 | 6 | 7 | - |
| 6 | 70 | 4 | 6 | 0,1 | <<1 | 1 | - |
| 4 | 50 | 4 | 6 | 0,1 | 34 | 35 | +/- |
| 4 | 70 | 4 | 6 | 0,1 | 65 | 70 | + |
| 4 | 70 | 4 | 6 | 0,3 | 50 | 55 | + |
| 4 | 70 | 4 | 4 | 0,3 | 40 | 45 | + |
| 5 | 50 | 4 | 6 | 0,1 | 19 | 20 | - |
| 5 | 70 | 4 | 6 | 0,1 | 38 | 40 | + |
| 5 | 70 | 4 | 6 | 0,3 | 30 | 35 | +/- |
| 5 | 70 | 4 | 4 | 0,3 | 23 | 25 | - |
| 7 | 50 | 4 | 6 | 0,1 | 38 | 40 | +/- |
| 7 | 70 | 4 | 6 | 0,1 | 74 | 80 | + |
| 7 | 70 | 4 | 6 | 0,3 | 58 | 59 | + |
| 7 | 70 | 4 | 4 | 0,3 | 45 | 50 | + |

## Patentansprüche

1. Ventilvorrichtung für ein Gehäuse (2) einer elektrochemischen Stromquelle (1) mit einer magnetischen Ventileinrichtung (4), umfassend ein Verschlusselement (6), das eine Gehäuseöffnung (3) in einer Verschlussposition druckdicht verschließt und in einer Öffnungsposition öffnet, damit Fluide oder Gase aus einem Gehäuseinnenraum (5) entweichen können, und mit zumindest einem Magnetfelderzeuger (10, 13,13'), der bis zu einem vorbestimmten Überdruck in dem Gehäuseinnenraum (5) das Verschlusselement (6) in der Verschlussposition druckdichtend fixiert und bei Erreichen oder Überschreiten des vorbestimmten Überdrucks einen Wechsel des Verschlusselementes (6) in zumindest eine Öffnungsposition zulässt

2. Ventilvorrichtung nach Anspruch 1, wobei der vorbestimmte Überdruck (24), ab dem das Verschlusselement (6) von der Verschlussposition in die Öffnungsposition wechselt, 2-8 mal größer gewählt ist, als ein während eines Normalbetriebes (21) in dem Gehäuseinnenraum (5) auftretender maximaler Überdruck, so dass das Verschlusselement (6) während eines Normalbetriebes (21) in der Verschlussposition verbleibt und bei Entwicklung von Fluiden oder Gasen, insbesondere während eines Störbetriebes (22) der elektrochemischen Stromquelle (1), in zumindest eine Öffnungsposition wechselt.

3. Ventilvorrichtung nach einem der vorhergehenden Ansprüche, wobei die Ventilvorrichtung (4) ein Scharnierelement (8) aufweist, mit dem das Verschlusselement (6) in der jeweiligen Öffnungsposition gehalten werden kann.

4. Ventilvorrichtung nach einem der vorhergehenden Ansprüche, wobei die Ventilvorrichtung (4) ein Rahmenelement (7) aufweist, mit dem die Ventilvorrichtung (4) an dem Gehäuse (2) befestigbar ist.

5. Ventilvorrichtung nach einem der vorhergehenden Ansprüche, wobei die Ventilvorrichtung (4) zumindest ein Dichtungselement (9,14,15) aufweist.

6. Ventilvorrichtung nach einem der vorhergehenden Ansprüche, wobei die Ventilvorrichtung (4) ein Spannelement (17) aufweist, mit der das Verschlusselement (6) von der zumindest einen Öffnungsposition in die Verschlussposition überführt werden kann.

7. Ventilvorrichtung nach einem der vorhergehenden Ansprüche, wobei die Ventilvorrichtung (4) ein Sensorelement oder ein Siegel aufweist, mit der ein aufgetretenes Öffnen des Verschlusselementes (6) angezeigt werden kann.

8. Ventilvorrichtung nach einem der vorhergehenden Ansprüche, wobei die Ventilvorrichtung (4) zumindest ein Dämpfungselement aufweist, mit der eine Kraftwirkung bei einem Wechsel des Verschlusselementes (6) zwischen den Positionen gedämpft werden kann.

9. Ventilvorrichtung nach einem der vorhergehenden Ansprüche, wobei die Ventilvorrichtung (4) ein Stabilisierungselement (16) aufweist, mit dem unter anderem das Rahmenelement (7), insbesondere gegen mechanische Verformungen, stabilisiert werden kann.

10. Ventilvorrichtung nach einem der vorhergehenden Ansprüche, wobei die Ventilvorrichtung (4) ein Filterelement aufweist, mit dem austretende Fluide gefiltert werden können.

11. Ventilvorrichtung nach einem der vorhergehenden Ansprüche, wobei die Ventilvorrichtung (4) mit einem Kopplungselement ausgestattet ist, an das eine Abführleitung für die austretende Fluide angekoppelt werden kann.

12. Gehäuse oder Transportbehälter für eine elektrochemische Stromquelle mit einer magnetischen Ventileinrichtung (4), insbesondere nach einem der Ansprüche 1 bis 11.

13. Gehäuse oder Transportbehälter nach Anspruch 12, wobei ein Verhältnis aus Öffnungsquerschnitt/Totvolumen des Gehäuseinnenraums (5) mindestens 0,2 cm²/l beträgt.

14. Elektrochemische Stromquelle mit einem eine magnetische Ventilvorrichtung (4) nach einem der Ansprüche 1 bis 11 aufweisenden Gehäuse (2) nach einem der Ansprüche 12 bis 13.

15. Verwendung einer magnetischen Ventileinrichtung nach einem der Ansprüche 1 bis 11, für Gehäuse (2), in denen Druckschwankungen auftreten können, für chemische oder biologische Reaktoren, für Batteriegehäuse, für Doppelschichtkondensatorengehäuse oder für Brennstoffzellengehäuse.
